# EUROPEAN PATENT APPLICATION

(11) **EP 4 625 937 A1**
(43) Date of publication of application: **01.10.2025**
(21) Application number: 23942808.9
(22) Date of filing: 28.06.2023
(51) Int. Cl.: H04L 45/50

(54) **MESSAGE FORWARDING METHOD AND APPARATUS, AND ELECTRONIC DEVICE AND STORAGE MEDIUM**

(71) Applicant: New H3C Technologies Co., Ltd., Hangzhou, Zhejiang 310052 (CN)
(72) Inventor: QIU, Yuanxiang, Beijing 100102 (CN)
(74) Representative: IPAZ
(86) International application number: PCT/CN2023/103402
(87) International publication number: WO 2025/000291

(57) **Abstract**

The embodiments of the present application relate to the technical field of communications. Provided are a message forwarding method and apparatus, and an electronic device and a storage medium. The method is applied to a first node, and specifically comprises: acquiring a first message, wherein the first message comprises a first label stack, the first label stack comprises node labels and a composite special label, and the node labels comprise a first label for indicating a first node and a second label for indicating a second node; and if the next label of the first label is a first-type composite special label and the node which corresponds to the next label of the first-type composite special label is unreachable, forwarding a second message to the second node, wherein the second message comprises a second label stack, and the stack top label in the second label stack is the second label. Thus, the reliability of an MPLS network can be improved.

## Description

### TECHNICAL FIELD

The present disclosure relates to the technical field of communications, in particular to a packet forwarding method and apparatus, an electronic device, and a storage medium.

### BACKGROUND

SR-MPLS (Segment Routing with Multi-Protocol Label Switching) refers to using SR (Segment Routing) in an MPLS (Multi-Protocol Label Switching) network to forward packets by taking labels as SIDs (Segment Identifiers).

Interactive multimedia service applications, such as VoIP (Voice over Internet Protocol), are very sensitive to network packet loss, and usually can only tolerate network packet loss of tens of milliseconds. However, when a link or node in the MPLS network fails, the time required to recover service transmission is usually hundreds of milliseconds or even several seconds, which is unable to meet business requirements, affecting the reliability of the MPLS network.

### SUMMARY

The object of the examples of the present disclosure is to provide a packet forwarding method, apparatus, electronic device and storage medium, which can reduce packet loss and improve the reliability of an MPLS network. The specific technical solutions are as follows:
In a first aspect, the present disclosure provides a packet forwarding method, wherein the method is applied to a first node, and comprises:
acquiring a first packet, wherein the first packet comprises a first label stack comprising node labels and a composite special purpose label, and the node labels comprise a first label indicating the first node and a second label indicating a second node;
in response to determining that a next label of the first label is a first type of composite special purpose label, and a node corresponding to a next label of the first type of composite special purpose label is unreachable, forwarding a second packet to the second node, wherein the second packet comprises a second label stack, and a stack top label of the second label stack is the second label.

In a possible example, the node corresponding to the next label of the first type of composite special purpose label is a third node, after acquiring the first packet, the method further comprises:
in response to determining that the next label of the first label is the first type of composite special purpose label, and the third node is reachable, forwarding a third packet to the third node, wherein the third packet comprises a third label stack, and a stack top label of the third label stack is a third label indicating the third node.

In a possible example, the node corresponding to the next label of the first type of composite special purpose label is a main tail node which is a tail node in a main path to forward the first packet, and the second node is a backup tail node which is a tail node in a backup path to forward the first packet; or,
the node corresponding to the next label of the first type of composite special purpose label is an intermediate node in the main path, and the second node is an intermediate node or the tail node in the main path.

In a possible example, the first node is a main tail node which is a tail node in a main path to forward the first packet, and the second node is a backup tail node which is a tail node in a backup path to forward the first packet;
after acquiring the first packet, the method further comprises:
in response to determining that the next label of the first label is a second type of composite special purpose label, forwarding a fourth packet, wherein the fourth packet is a packet in an inner layer of the first label stack.

In a possible example, in response to determining that the first node is a source node, acquiring the first packet comprises:
receiving a fifth packet;
encapsulating the first label stack in an outer layer of the fifth packet, to obtain the first packet.

In a possible example, the first type of composite special purpose label comprises a first extension label and a first indication label, and the first indication label comprises a label value field, a type field, a stack bottom marker bit, and a number field;
a value of the type field is a first value, which is to indicate that in response to determining that a node corresponding to a node label after the first indication label in the first label stack is unreachable, labels the number of which is indicated by the number field after the first indication label are popped up;
the number field is to indicate the number of labels to be popped up;
a value of the stack bottom marker bit is a second value, which is to indicate that the first indication label is not a stack bottom label of the first label stack.

In a possible example, the second composite special purpose label comprises a second extension label and a second indication label, and the second indication label comprises a label value field, a type field, a stack bottom marker bit, and a number field;
a value of the type field is a second value, which is to indicate that labels the number of which is indicated by the number field after the second indication label are popped up unconditionally;
the number field is to indicate the number of labels to be popped up;
a value of the stack bottom marker bit is a second value, which is to indicate that the second indication label is not a stack bottom label of the first label stack.

In a second aspect, an example of the present disclosure provides a packet forwarding apparatus, wherein the apparatus is applied to a first node, and comprises:
an acquisition module, to acquire a first packet, wherein the first packet comprises a first label stack comprising node labels and a composite special purpose label, and the node labels comprise a first label indicating the first node and a second label indicating a second node;
a forwarding module, to forward a second packet to the second node in response to determining that a next label of the first label is a first type of composite special purpose label, and a node corresponding to a next label of the first type of composite special purpose label is unreachable, wherein the second packet comprises a second label stack, and a stack top label of the second label stack is the second label.

In a possible example, the node corresponding to the next label of the first type of composite special purpose label is a third node, and the forwarding module is further to:
in response to determining that the next label of the first label is the first type of composite special purpose label, and the third node is reachable, forward a third packet to the third node, wherein the third packet comprises a third label stack, and a stack top label of the third label stack is a third label indicating the third node.

In a possible example,
the node corresponding to the next label of the first type of composite special purpose label is a main tail node which is a tail node in a main path to forward the first packet, and the second node is a backup tail node which is a tail node in a backup path to forward the first packet; or,
the node corresponding to the next label of the first type of composite special purpose label is an intermediate node in the main path, and the second node is an intermediate node or the tail node in the main path.

In a possible example, the first node is a main tail node which is a tail node in a main path to forward the first packet, the second node is a backup tail node which is a tail node in a backup path to forward the first packet; the forwarding module is further to:
in response to determining that the next label of the first label is a second type of composite special purpose label, forward a fourth packet, wherein the fourth packet is a packet in an inner layer of the first label stack.

In a possible example, in response to determining that the first node is a source node, the acquisition module is specifically to:
receive a fifth packet;
encapsulate the first label stack in an outer layer of the fifth packet, to obtain the first packet.

In a possible example, the first type of composite special purpose label comprises a first extension label and a first indication label, and the first indication label comprises a label value field, a type field, a stack bottom marker bit, and a number field;
a value of the type field is a first value, which is to indicate that in response to determining that a node corresponding to a node label after the first indication label in the first label stack is unreachable, labels the number of which is indicated by the number field after the first indication label are popped up;
the number field is to indicate the number of labels to be popped up;
a value of the stack bottom marker bit is a second value, which is to indicate that the first indication label is not a stack bottom label of the first label stack.

In a possible example, the second composite special purpose label comprises a second extension label and a second indication label, and the second indication label comprises a label value field, a type field, a stack bottom marker bit, and a number field;
a value of the type field is a second value, which is to indicate that labels the number of which is indicated by the number field after the second indication label are popped up unconditionally;
the number field is to indicate the number of labels to be popped up;
a value of the stack bottom marker bit is a second value, which is to indicate that the second indication label is not a stack bottom label of the first label stack.

In a third aspect, an example of the present disclosure provides an electronic device, wherein the electronic device comprises:
a processor;
a transceiver;
a machine-readable storage medium, which stores machine-executable instructions that can be executed by the processor to cause the processor to:
   acquire a first packet, wherein the first packet comprises a first label stack comprising node labels and a composite special purpose label, and the node labels comprise a first label indicating a first node and a second label indicating a second node, the first node is the electronic device;
   in response to determining that a next label of the first label is a first type of composite special purpose label, and a node corresponding to a next label of the first type of composite special purpose label is unreachable, forward a second packet to the second node through the transceiver, wherein the second packet comprises a second label stack, and a stack top label of the second label stack is the second label.

In a possible example,
the next label of the first type of composite special purpose label is a third node, and the machine-executable instructions further cause the processor to:
in response to determining that the next label of the first label is the first type of composite special purpose label, and the third node is reachable, forward a third packet to the third node through the transceiver, wherein the third packet comprises a third label stack, and a stack top label of the third label stack is a third label indicating the third node.

In a possible example,
the node corresponding to the next label of the first type of composite special purpose label is a main tail node which is a tail node in a main path to forward the first packet, and the second node is a backup tail node which is a tail node in a backup path to forward the first packet; or,
the node corresponding to the next label of the first type of composite special purpose label is an intermediate node in the main path, and the second node is an intermediate node or the tail node in the main path.

In a possible example, the first node is a main tail node which is a tail node in a main path to forward the first packet, and the second node is a backup tail node which is a tail node in a backup path to forward the first packet;
the machine-executable instructions further cause the processor to:
in response to determining that the next label of the first label is a second type of composite special purpose label, forward a fourth packet through the transceiver, wherein the fourth packet is a packet in an inner layer of the first label stack.

In a possible example, in response to determining that the first node is a source node, the machine-executable instructions further cause the processor to:
receive a fifth packet through the transceiver;
encapsulate the first label stack in an outer layer of the fifth packet, to obtain the first packet.

In a possible example, a first type of composite special purpose label comprises a first extension label and a first indication label, and the first indication label comprises a label value field, a type field, a stack bottom marker bit, and a number field;
a value of the type field is a first value, which is to indicate that in response to determining that a node corresponding to a node label after the first indication label in the first label stack is unreachable, labels the number of which is indicated by the number field after the first indication label are popped up;
the number field is to indicate the number of labels to be popped up;
a value of the stack bottom marker bit is a second value, which is to indicate that the first indication label is not a stack bottom label of the first label stack.

In a possible example, the second composite special purpose label comprises a second extension label and a second indication label, and the second indication label comprises a label value field, a type field, a stack bottom marker bit, and a number field;
a value of the type field is a second value, which is to indicate that labels the number of which is indicated by the number field after the second indication label are popped up unconditionally;
the number field is to indicate the number of labels to be popped up;
a value of the stack bottom marker bit is a second value, which is to indicate that the second indication label is not a stack bottom label of the first label stack.

In a fourth aspect, an example of the present disclosure provides a machine-readable storage medium, which stores machine-executable instructions that, when called and executed by a processor, cause the processor to implement the method described in the first aspect.

In a fifth aspect, an example of the present disclosure provides a computer program product, which causes a processor to implement the method described in the first aspect.

With this method, the first node can acquire a first packet, wherein the first packet comprises the first label stack that is encapsulated with a composite special purpose label, and in the case that the first node identifies that the next label is a first type of composite special purpose label, and the node corresponding to the next label of the first type of composite special purpose label is unreachable, the first node can forward the second packet to the second node. In this way, unreachable nodes are bypassed, that is to say, when a node in the forwarding path fails or a link between nodes fails, there is no need to lose packets firstly, and then switch to other paths to continue transmitting traffic flows, instead it can bypass unreachable nodes so that packets can continue to be forwarded, which can reduce packets loss caused by node or link failures and improve network reliability.

### BRIEF DESCRIPTION OF THE DRAWINGS

The drawings described here provide a further understanding of and constitute a part of the present disclosure. The schematic examples and descriptions of the present disclosure are used to explain and do not constitute an improper limitation on the present disclosure.
Fig. 1 is a schematic diagram of an MPLS label format provided by an example of the present disclosure;
FIG. 2 is an exemplary schematic diagram of an MPLS network architecture provided by an example of the present disclosure;
FIG. 3 is an exemplary schematic diagram of another MPLS network architecture provided by an example of the present disclosure;
FIG. 4 is a flow chart of a packet forwarding method provided by an example of the present disclosure;
FIG. 5 is a schematic diagram of a composite special purpose label format provided by an example of the present disclosure;
FIG. 6 is a schematic diagram of a packet format provided by an example of the present disclosure;
FIG. 7 is a schematic diagram of another packet format provided by an example of the present disclosure;
FIG. 8 is a schematic structural diagram of a packet forwarding apparatus provided by an example of the present disclosure;
FIG. 9 is a schematic structural diagram of an electronic device provided by an example of the present disclosure.

### DETAILED DESCRIPTION

In order to make the objective, technical solutions and advantages of the present disclosure clearer and more understandable, the present disclosure will be described in more detail below with reference to the accompanying drawings and examples. Obviously, the described examples are only some, and not all, of the examples of the present disclosure. All other examples obtained based on the examples of the present disclosure by those skilled in the art fall into the scope of protection of the present disclosure.

For ease of understanding, firstly, relevant terms involved in the examples of the present disclosure are introduced.

### 1. SR

SR uses a source node path selection mechanism, and encapsulates the SID of a segment to be passed through in a forwarding path at a source node in advance. When a packet passes through a SR node, the SR node forwards the packet according to the SID of the packet. In addition to the source node, other nodes do not require to maintain the path state.

SR is a new protocol proposed to meet the requirements of wide area networks of the new generation. The development of cloud computing poses new challenges to the WAN, which require changes to the traditional WAN. SD-WAN, as the core technology for reconstructing wide area networks, can accelerate network delivery, optimize business quality, improve bandwidth utilization and simplify network operation and maintenance process through automatic deployment, centralized control, intelligent scheduling and visualization, etc., which meets the requirements of cloud computing on WANs.

Intelligent scheduling is a key capability of the new generation WAN, and is very important for guaranteeing application quality and optimizing bandwidth resources. The current traffic engineering technologies, such as MPLS and RSVP can meet the differentiated bandwidth guarantee needs of businesses, but there are problems such as multiple types of protocols, complex deployment, management difficulties, and poor scalability, which cannot meet the requirements of dynamic deployment, flexible scheduling, and scalability required by the new generation WAN. In order to meet these requirements, the SR protocol has emerged.

### 2. SR-MPLS.

SR-MPLS refers to using SR in an MPLS network to forward packets with labels as SIDs.

SR-MPLS not only inherits the advantages of the MPLS technology, but also can adapt to the development of future SDN and other technologies, providing a flexible and efficient control method for SD-WAN networks. SR-MPLS has the characteristics of simple using and easy scalability, which can better achieve traffic scheduling and path optimization, ensure critical business quality, balance traffic distribution, improve dedicated line utilization, and reduce line costs.

Wherein, the SR-MPLS technology mainly involves the following concepts:
SR node: refers to a device that enables a SR-MPLS function. Wherein, an ingress node responsible for adding labels to packets entering the SR-MPLS network is a source node. An exit node responsible for stripping off labels in packets and forwarding the packets to a destination network is a tail node. The nodes between the source node and the tail node in the SR-MPLS network are intermediate nodes.
SR Domain: which is a set of SR nodes.
Segment: which is to indicate the operation performed by the SR nodes on the received packets, in SR-MPLS technology, refers to the operation on the labels, that is, the operation of pushing the labels, exchanging the labels or popping up the labels on the packets.
SID: an MPLS label in SR-MPLS technology.
SRLSP (Segment Routing Label Switched Path): which uses labels as SIDs to perform segment routing forwarding on the packets, and the path that the packets pass through is called SRLSP.
MPLS label: which is a fixed-length identifier with only local significance, which is to uniquely identify the FEC (Forwarding Equivalence Class) to which a packet belongs.

MPLS is a classified forwarding technology, which can group packets with the same forwarding processing mode into one class, called a forwarding equivalence class. Packets belonging to the same forwarding equivalence class will be treated in the same way in the same MPLS network.

Wherein, the packets with the same forwarding processing mode may be those with the same destination address, using the same forwarding path, or with the same service level.

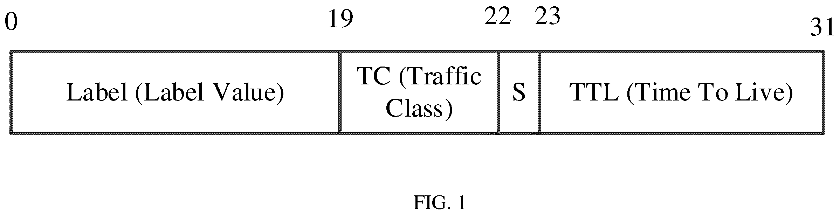

As shown in Figure 1, the length of an MPLS label is 4 bytes, comprising the following 4 fields:
Label: a label value, with a length of 20 bits, to identify an FEC.
TC (Traffic Class): with a length of 3 bits, to indicate QoS (Quality of Service). This field may also be referred to as an Exp field.
S: Stack bottom marker bit of a label, with a length of 1 bit. MPLS supports multiple labels, that is, multiple labels can be encapsulated between a link layer frame header and a network layer packet header to form a label stack. A outermost label close to the link layer frame header is a stack top label, and a innermost label close to the network layer packet header is a stack bottom label. When S is 1, it represents the stack bottom label, and when S is 0, it represents a label other than the stack bottom label.
TTL (Time To Live): with a length of 8 bits, which has the same meaning as a TTL in the IP packet, and can prevent loops.

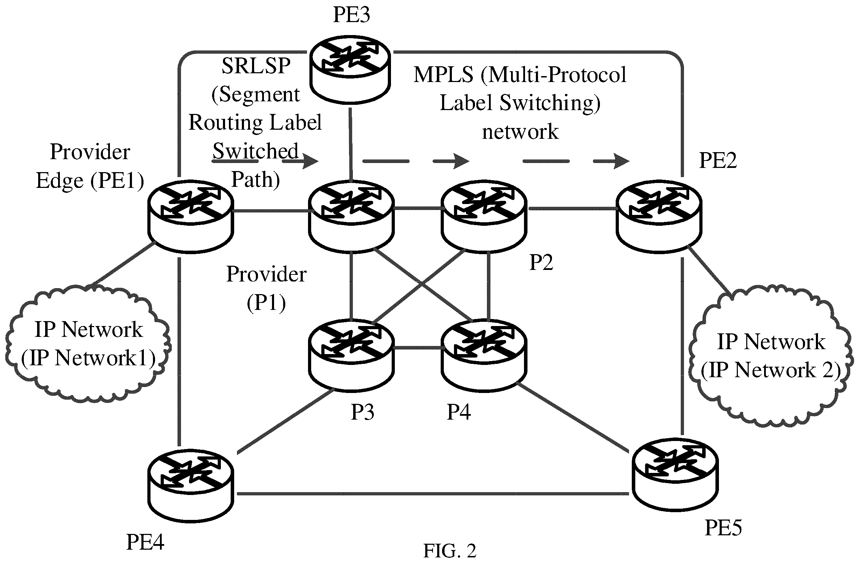

SR-MPLS forwarding is implemented based on an MPLS network architecture. Network architecture of the MPLS network is shown in Figure 2. Figure 2 exemplarily shows network devices included in the MPLS network: Provider Edges (PE1 to PE5), and Providers (P1 to P4), to which the number of network devices included in the MPLS network is not limited in actual implementations.

Wherein, PE1, P1, P2, and PE2 form a SRLSP, PE1 is connected to an IP Network (IP Network 1), PE1 can be used as the source node to forward packets from IP Network 1, and the packets can be forwarded along the SRLSP. PE2 is connected to an IP Network (IP Network 2) and can be used as the tail node to forward packets to IP Network 2. Thus, the communication between the IP network 1 and the IP network 2 is achieved.

The forwarding mechanism of SR-MPLS is the same as that of the MPLS network. MPLS labels can be used as SIDs to forward packets.

Before using the forwarding mechanism of SR-MPLS to forward packets, the following operations are required to complete:
(1) SID allocation. It is needed to allocate MPLS labels to each SR node in the forwarding path, and use the MPLS labels as SIDs.
(2) Creating a label forwarding entry. The SR nodes in the SR domain generate local label forwarding entries according to the allocated MPLS label information.
(3) Establishing SRLSP. SRLSP can be manually configured, or can be dynamically established through IGP/BGP protocol, or issued by a controller.

After the above configurations are completed, SRLSP can be used to forward packets. When the source node in the SR domain receives the packets from the IP network, it encapsulates the label information on the SRLSP for the packets, and forwards the packets to the tail node through the SRLSP. After the tail node receives the packets from the SRLSP, it strips off the labels in the packets, restores the original packets, and searches a routing table according to the destination addresses of the original packets, in order to forward the original packets.

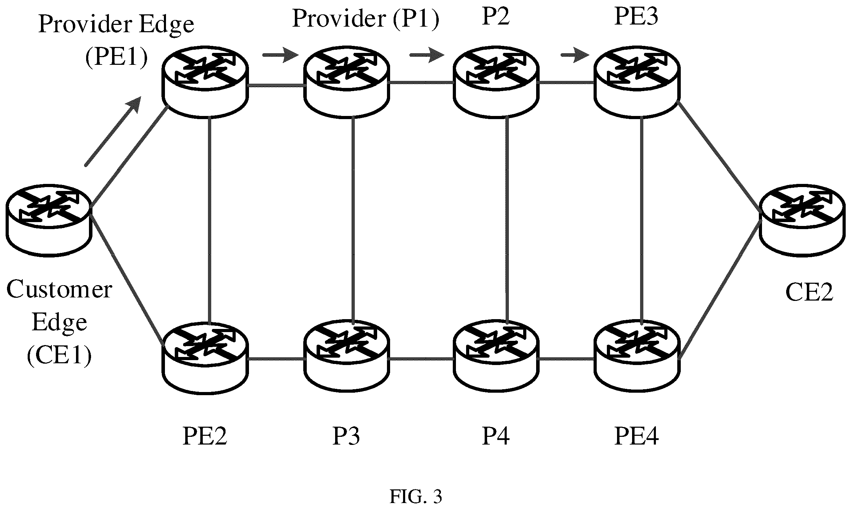

In some scenarios, there may be multiple mutual backup forwarding paths between two IP networks. As shown in Figure 3, the Customer Edges (CE1 and CE2) belong to two different IP networks. PE1 to PE4 and P1 to P4 between CE1 and CE2 belong to a SR-MPLS network.

Wherein, CE1 is dual-homing connected to PE1 and PE2, which are mutual backups. PE1 is a source node in a main path, P1 and P2 are intermediate nodes in the main path, and PE3 is a main tail node in the main path.

PE2 is a source node in a backup path, P3 and P4 are intermediate nodes in the backup path, and PE4 is a backup tail node in the backup path.

After the traffic flows of CE1 are received by PE1, which can forward the traffic flows to CE2 using the main path. However, if a node in the main path fails or a link between nodes fails, it is needed to wait until PE1 discovers the failure and then switches to forward the traffic flows with the backup path. Switching paths takes a long time, causing packet loss and poor network reliability.

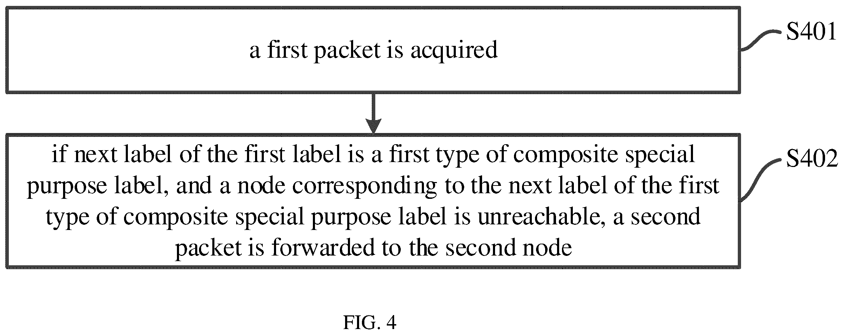

In order to solve the above problem, an example of the present disclosure provides a packet forwarding method, which is applied to a first node, wherein the first node is a node in an MPLS network. As shown in Figure 4, the method comprises:
S401. a first packet is acquired.

Wherein, the first packet comprises a first label stack comprising node labels and a composite special purpose label, and the node labels comprise a first label indicating the first node and a second label indicating a second node.

The node labels specifically include the label of each node in a main path to forward the first packet, and include a composite special purpose label before the label of each node to be protected in the first label stack.

Taking Figure 3 as an example, if the first node is P1 and the node to be protected is P2, the first label stack include the MPLS label of P1, the composite special purpose label, the MPLS label of P2 and the MPLS label of PE3.

S402. if the next label of the first label is a first type of composite special purpose label, and a node corresponding to the next label of the first type of composite special purpose label is unreachable, a second packet is forwarded to the second node.

Wherein, the second packet comprises a second label stack, and a stack top label of the second label stack is a second label.

The first type of composite special purpose label is to indicate that a first specified number of labels after the first type of composite special purpose label are popped up when the node corresponding to the next label is unreachable.

After acquiring the first packet, the first node can identify that the stack top label of the first label is its own label, that is, the first label, and then can pop up the first label. After the first label is popped up, if the stack top label is the first type of composite special purpose label, and the node corresponding to the next label is unreachable, then the first type of composite label and a first specified number of labels can be popped up, to obtain the second packet.

Since the stack top label of the second packet is the second label, the first node may forward the second packet to the second node.

With this method, the first node can acquire the first packet, wherein the first packet comprises the first label stack that is encapsulated with a composite special purpose label, and in the case that the first node identifies that the next label is a first type of composite special purpose label, and the node corresponding to the next label of the first type of composite special purpose label is unreachable, the first node can forward the second packet to the second node. In this way, unreachable nodes are bypassed, that is to say, when a node in a forwarding path fails or a link between nodes fails, there is no need to lose packets firstly, and then switch to other paths to continue transmitting traffic flows, instead it can bypass unreachable nodes so that packets can continue to be forwarded, which can reduce packets loss caused by node or link failures and improve network reliability.

In some examples of the present disclosure, the node corresponding to the next label of the first type of composite special purpose label is a third node, after acquiring the first packet, the method further comprises:
if the next label of the first label is the first type of composite special purpose label, and the third node is reachable, forwarding a third packet to the third node, wherein the third packet comprises a third label stack, and a stack top label of the third label stack is a third label indicating the third node.

It can be understood that, in this case, the first label stack comprises the first label, the first type of composite special purpose label, the third label, and the second label in sequence. Wherein, the third node is a node to be protected.

The first node identifies that the label next to the first label is the first type of composite special purpose label, and the third node corresponding to the next label is unreachable, then the first type of composite special purpose label can be popped up, to obtain the third packet.

Since the stack top label of the third packet is the third label, the first node can forward the third packet to the third node.

With this method, when the node label comprises the first type of composite special purpose label, if the node corresponding to the next label of the first type of composite special purpose label is reachable, the first node can still forward packets to the node corresponding to the next label normally, which can improve network reliability.

In a possible scenario, in the above example, the node corresponding to the next label of the first type of composite special purpose label is a main tail node which is a tail node in a main path to forward the first packet. Correspondingly, the second node is a backup tail node which is a tail node in the main path to forward the first packet.

Taking FIG. 3 as an example, if the first node is P2, then the main tail node is PE3, and the backup tail node is PE4.

That is, if P2 identifies that the next label of the first type of composite special purpose label is the label of PE3, and PE3 is unreachable, then forward the second packet to PE4. In this way, even if the main tail node fails, the second packet can be forwarded to the backup tail node in time, which can avoid packet loss caused by the failure of the main tail node.

In another possible scenario, in the above example, the node corresponding to the next label of the first type of composite special purpose label is an intermediate node in the main path, and the second node is an intermediate node or the tail node in the main path.

Taking FIG. 3 as an example, if the first node is P1, then the node corresponding to the next label of the first type of composite special purpose label is P2, the second node is PE3. If P1 identifies that P2 is unreachable, forward the second packet to PE3; if P1 identifies that P2 is reachable, forward the third packet to P2.

Alternatively, if the first node is PE1, then the node corresponding to the next label of the first type of composite special purpose label is P1, and the second node is P2. If PE1 identifies that P1 is unreachable, forward the second packet to P2; if PE1 identifies that P1 is reachable, forward the third packet to P1.

It should be noted that the first label stack may include multiple first type of composite special purpose labels. If multiple nodes in one path need to be protected, one first type of composite special purpose label can be added before the label of each node to be protected.

Furthermore, if the first node identifies that the next label of the first label is the first type of composite special purpose label, and the node corresponding to the next label of the first type of composite special purpose label is unreachable, and the next label of the label of the unreachable node is still a first type of composite special purpose label, then the first node can determine whether the node corresponding to the next label of the first type of composite special purpose label is reachable. If reachable, forward the second packet. If not reachable, and the next label is still the first type of composite special purpose label, then continue to determine whether the node corresponding to the next label of the first type of composite special purpose label is reachable, and so forth, until it is determined that the node corresponding to the next label of the first type of composite special purpose label is reachable, then forward the third packet to the reachable node; or until it is determined that the node corresponding to the next label of the first type of composite special purpose label is unreachable, and the next label is a node label, then forward the second packet to the node corresponding to the node label.

For example, if the main path is P1 -->P2 -->P3 --> PE3, and if the first node is P1, and both of P2 and P3 are nodes to be protected, then the first label stack comprises: the label of P1, a first type of composite special purpose label 1, the label of P2, a first type of composite special purpose label 2, the label of P3, and the label of PE3, in an order from the stack top to the stack bottom.

After P1 acquires the first packet, it pops up its own label, and then identifies that the stack top label is the first type of composite special purpose label 1. If P2 is unreachable at this time, it continues to identify labels after P2. Then the first type of composite special purpose label 2 can be identified, and it is further determined whether P3 is reachable. If P3 is reachable, the third packet can be forwarded to P3. At this time, the stack top label of the third packet is the label of P3; if P3 is unreachable, the second packet is forwarded to PE3. At this time, the stack top label of the third packet is the label of PE3.

With this method, the protection of the intermediate nodes and tail nodes in the main path can be realized. In the case where the protected intermediate nodes or tail nodes are unreachable, the unreachable nodes can be skipped, so that the packet can continue to be forwarded on the subsequent nodes, thereby packet loss caused by node failure can be reduced.

In some examples of the present disclosure, the first node may be the main tail node, and in a case of that the main tail node needs to be protected, the first label stack comprises a second type of composite special purpose label.

On the basis of the example corresponding to FIG. 4, the first node is a main tail node which is a tail node in the main path to forward the first packet.

In this case, the second node is a backup tail node which is a tail node in a backup path to forward the first packet.

After acquiring the first packet, if the next label of the first label is a second type of composite special purpose label, then the first node forwards a fourth packet which is a packet in an inner layer of the first label stack.

Wherein, the second type of composite special purpose label is to indicate that a second specified number of labels after the second type of composite special purpose label are unconditionally popped up.

Still taking Figure 3 as an example, after receiving the first packet, PE3 pops up a first label at the stack top of a first label stack, and then identifies a second type of composite special purpose label, and then pops up the second type of composite special purpose label and subsequent second specified number of labels unconditionally. After the popping action is completed, all the labels in the first label stack are popped up, then the packet encapsulated in an inner layer of the first packet can be recovered, that is, a fourth packet is obtained, and then the fourth packet can be forwarded to an IP network.

It can be seen that in the scenario of protecting the main tail node, if the main tail node is reachable, after the first packet is transmitted to the main tail node, the main tail node can unconditionally pop up the subsequent label of the backup tail node under the indication of the second type of composite special purpose label, thereby recovering the fourth packet encapsulated in the inner layer of the first packet, so that the fourth packet can continue to be forwarded to the subsequent IP network, improving network reliability.

In some examples of the present disclosure, when the first node is a source node, acquiring the first packet may specifically be implemented as: receiving a fifth packet, encapsulating the first label stack in an outer layer of the fifth packet to obtain the first packet.

Wherein, the source node is configured with corresponding node information about the node to be protected in advance. After receiving the fifth packet, in order to enable the fifth packet to be forwarded in an MPLS network, a label stack may be encapsulated for the fifth packet. And one first type of composite special purpose label is added before the label of each node that needs to be protected.

If the main tail node is a node needed to be protected, the second type of composite special purpose label and the label of the backup tail node are encapsulated after the label of the main tail node.

With this method, the source node can encapsulate the first label stack in the fifth packet, and the first label stack comprises a composite special purpose label, so that the reliability protection of the nodes in the forwarding path of the first packet can be realized, improving network reliability.

The composite special purpose label in the examples of the present disclosure is introduced below.

Wherein, the first type of composite special purpose label comprises a first extension label and a first indication label, wherein the first indication label comprises a label value field, a type field, a stack bottom marker bit, and a number field;
the value of the type field is a first value, which is to indicate that when a node corresponding to a node label after the first indication label in the first label stack is unreachable, labels the number of which is indicated by the number field after the first indication label are popped up;
the number field is to indicate the number of labels to be popped up;
the value of the stack bottom marker bit is a second value, which is to indicate that the first indication label is not the stack bottom label of the first label stack.

The second composite special purpose label comprises a second extension label and a second indication label, wherein the second indication label comprises a label value field, a type field, a stack bottom marker bit, and a number field;
the value of the type field is a second value, which is to indicate that labels the number of which is indicated by the number field after the second indication label are popped up unconditionally;
the number field is to indicate the number of labels to be popped up;
the value of the stack bottom marker bit is a second value, which is to indicate that the second indication label is not the stack bottom label of the first label stack.

Both the first type of composite special purpose label and the second type of composite special purpose label above are cSPLs (Composite Special Purpose Labels).

The composite special purpose label comprises an extension label and an indication label which may be called PMLI (Pop Multiple Labels).

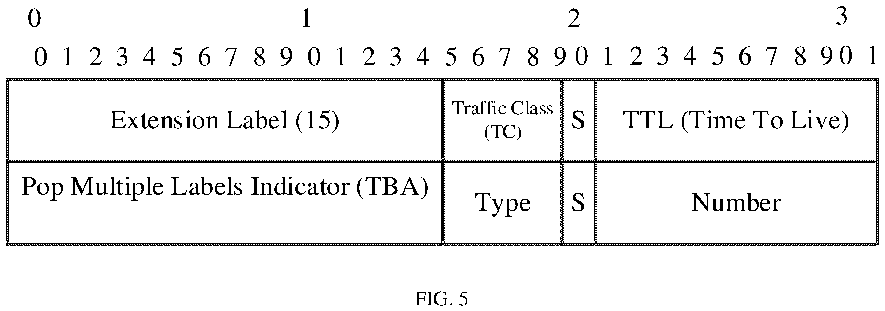

The format of the composite special purpose label is shown in Figure 5. In Figure 5, the first row is an extension label (Extension Label), and the label value of the extension label is 15. The extension label also comprises TC, S, referring to the relevant introduction of the MPLS labels in the above examples.

The second row in FIG. 5 is a PMLI, and the PMLI comprises a label value field, a type (Type) field, a stack bottom marker bit (S), and a number (Number) field.

Wherein, the length of the label value field is 20 bits, and the length of the Type field is 3 bits, the length of S is 1 bit, and the length of the Number field is 8 bits.

The label value of the PMLI needs to be allocated uniformly, which is represented by TBA (To be allocated) in this example of the present disclosure.

The Type field is to indicate the type of the condition for popping up multiple labels at the same time with a value ranging from 0 to 255.

When the value of the Type field is 0, it is to indicate that labels, the number of which is indicated by Number, after the PMLI are unconditionally popped up;
when the value of the Type field is 1, it is to indicate that when the next label of the PMLI in the label stack is unreachable, labels, the number of which is indicated by Number, after the PMLI are popped up;
the value 2 to 255 of the Type field is reserved.

Number indicates the number of label entries that need to be popped up at the same time.

It can be understood that, when the value of the Type field in FIG. 5 is 1, the composite special purpose label shown in FIG. 5 is a first type of composite special purpose label introduced in the foregoing example;
when the value of the Type field in FIG. 5 is 0, the composite special purpose label shown in FIG. 5 is a second type of composite special purpose label introduced in the foregoing examples.

The packet forwarding method provided by the examples of the present disclosure will be introduced below with reference to specific examples.

Taking the scenario in Figure 3 as an example, a main tail node PE3 and a backup tail node PE4 can advertise routes, thereby notifying their own MPLS labels to upstream nodes.

After a source node PE1 receives routing information from PE3 and PE4, it can learn the dual-homing route of CE2 as well as the MPLS labels of PE3 and PE4 that are dual-homed to CE2.

After PE1 receives an IP packet sent by CE2, it can select an optimal forwarding path and a suboptimal forwarding path according to the route optimization policy, and use the optimal forwarding path as the main path and the suboptimal forwarding path as the backup path.

In Figure 3, the main path is an MPLS TE path PE1-->P1-->P2-->PE3, and the backup path is PE2-->P3-->P4-->PE4.

And PE1 encapsulates a label stack and a link layer header in an outer layer of the IP packet, so that the packet can be transmitted along the MPLS TE path.

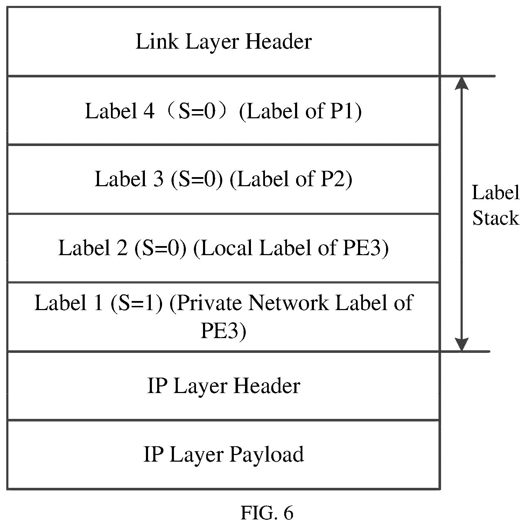

In the prior art, the packet structure corresponding to the packet forwarded by PE1 to P1 is shown in Figure 6. The packet comprises a link layer header, a label stack, an IP layer header, and an IP layer payload in an order from an outer layer to an inner layer.

The label stack comprises label 4 to label 1 in an order from a stack top to a stack bottom.

Wherein, the label 4 is the label of P1, and the stack bottom marker bit of the label 4 is S=0.

Label 3 is the label of P2, and the stack bottom marker bit of label 3 is S=0.

Label 2 is the local label of PE3, and the stack bottom marker bit of label 2 is S=0.

Label 1 is the private network label of PE3, and the stack bottom marker bit of label 1 is S=1, indicating that label 1 is the stack bottom label.

During the process of forwarding the packet along the main path, if one of the nodes fails, for example, if P2 fails, the packet will be lost. After PE1 identifies that the main path fails, the packet is forwarded with the backup path, causing packet loss before switching to the backup path.

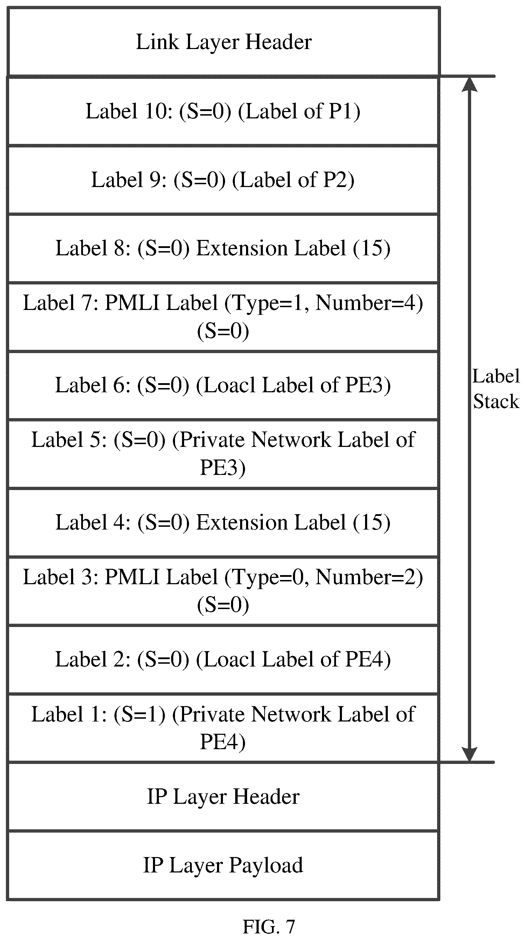

In an example of this disclosure, if it is needed to protect the main tail node, the structure of a packet forwarded by PE1 to P1 is shown in Figure 7. The packet comprises a link layer header, a label stack, an IP layer header and an IP layer payload in an order from a stack top to a stack bottom.

The label stack comprises label 10 to label 1 in an order from a stack top to a stack bottom, and the S of each of label 10 to label 2 is 0.

Label 10 is the label of P1, and label 9 is the label of P2. Before the local label (label 6) of PE3, first type of composite special purpose labels, namely label 8 and label 7, are added. Wherein Label 8 is an extension label which has a label value of 15, and label 7 is a PMLI label. In addition, after the private network label (label 5) of PE3, second type of composite special purpose labels, namely label 4 and label 3, are added. Wherein label 4 is an extension label which has a label value of 15, label 3 is a PMLI label. The local label (label 2) and the private network label (label 1) of the backup tail node PE4 are also added.

It should be noted that, for each tail node, the local node label and the private network label of the tail node need to be encapsulated, so that the tail node can forward the packet to the private network according to the private network label.

The packet can be forwarded along the main path, and P1 can pop up its own local label (label 10), and then forward the packet to P2.

P2 can pop up its own local label (label 9), and then identify that label 8 is an extension label, then can further identify label 7. Since the Type of label 7 has a value of 1, P2 further identifies whether PE3 corresponding to the next label (label 6) is reachable.

If PE3 is reachable, label 8 and label 7 are popped up, and then the packet is forwarded to PE3. PE3 can identify that the stack top label (label 6) and the next label (label 5) are the local label and the VPN label respectively, PE3 can acquire the VPN private network instance based on the VPN label, and pop up label 6 and label 5. Since S=0 for label 5, it means that label 5 is not the stack bottom label, then PE3 continues to identify label 4 and label 3. Since Type=0 and Number=2 for label 3, PE3 pops up the two labels after label 3 unconditionally. Since S=1 for label 1, PE3 can determine that label 1 is the stack bottom label, and an inner layer IP packet can be restored after label 1 is popped up. Furthermore, PE3 acquires the IP address in the IP layer header, and searches the VPN forwarding table corresponding to the VPN private network instance for the route corresponding to the IP address, so as to send the IP packet to the VPN private network.

If PE3 is unreachable, since Number = 4 for label 7, P2 can pop up 4 labels (label 6, label 5, label 4, and label 3) after label 7, that is, the stack top label becomes label 2. Then P2 can search for the routing table, and forward the packet to PE4 along an available path between P2 and PE4. Furthermore, PE4 can forward the inner layer IP packet to the VPN private network.

Optionally, if it is needed to protect the main and backup tail nodes and an intermediate node at the same time, on the basis of Figure 7, the first type of composite special purpose label can be added before the intermediate node to be protected, for example, an extension label and a PMLI label are added between label 10 and label 9, and Type=0, Number=3, and S=0 for the PMLI label. After P1 pops up label 10, it can identify the extension label and the PMLI label. If it is determined that P2 is unreachable, it can pop up three labels, that is, label 9, label 8, and label 7, after the PMLI label. At this time, the stack top label is label 6, so that the packet is forwarded to PE3.

It should be noted that if it is needed to protect all intermediate nodes in a main path, one composite special purpose label of Type=1 can be added before each intermediate node. If the multiple intermediate nodes in the main path fail consecutively, the labels of unreachable intermediate nodes are popped up one by one according to respective composite special purpose labels, until a label corresponding to a reachable node is found in the label stack or the label at the stack bottom is traversed.

The examples of the present disclosure do not limit the number of nodes to be protected, and the controller may configure the source node with nodes to be protected on each forwarding path in advance.

With this method, there is no need to extend a control plane protocol, it is only needed to improve the label stack, and make small adjustments on the processing flow of an MPLS forwarding plane, so that fast path switching can be realized when an intermediate node or a main tail node of the MPLS network fails. Compared to waiting for a source node to discover the failure of a main path and then switch to a backup path, the packet loss rate can be reduced, reducing the transmission delay of the packets, and improving network reliability.

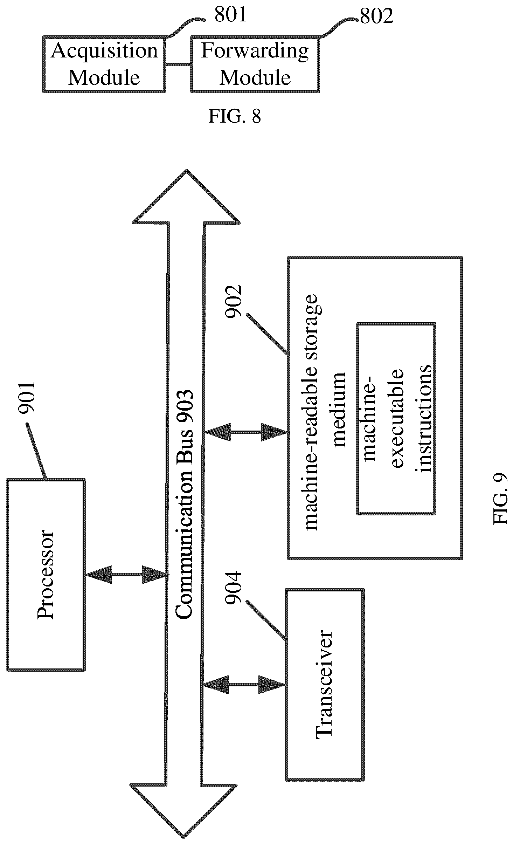

Based on the same concept, an example of the present disclosure provides a packet forwarding apparatus, which is applied to a first node, as shown in Figure 8, and comprises:
an acquisition module 801 to acquire a first packet, wherein the first packet comprises a first label stack comprising node labels and a composite special purpose label, and the node labels comprise a first label indicating the first node and a second label indicating a second node;
a forwarding module 802, to forward a second packet to the second node if a next label of the first label is a first type of composite special purpose label, and a node corresponding to a next label of the first type of composite special purpose label is unreachable, wherein the second packet comprises a second label stack, and a stack top label of the second label stack is the second label.

Optionally, the node corresponding to the next label of the first type of composite special purpose label is a third node, and the forwarding module 802 is further to:
if the next label of the first label is the first type of composite special purpose label, and the third node is reachable, forward a third packet to the third node, wherein the third packet comprises a third label stack, and a stack top label of the third label stack is a third label indicating the third node.

Optionally, the node corresponding to the next label of the first type of composite special purpose label is a main tail node which is a tail node in a main path to forward the first packet, and the second node is a backup tail node which is a tail node in a backup path to forward the first packet; or,
the node corresponding to the next label of the first type of composite special purpose label is an intermediate node in the main path, and the second node is an intermediate node or tail node in the main path.

Optionally, the first node is a main tail node which is a tail node in a main path to forward the first packet, the second node is a backup tail node which is a tail node in a backup path to forward the first packet; the forwarding module 802 is further to:
if the next label of the first label is a second type of composite special purpose label, forward a fourth packet, wherein the fourth packet is a packet in an inner layer of the first label stack.

Optionally, when the first node is a source node, the acquisition module 801 is specifically to:
receive a fifth packet;
encapsulate the first label stack in an outer layer of the fifth packet, to obtain the first packet.

Optionally, the first type of composite special purpose label comprises a first extension label and a first indication label, and the first indication label comprises a label value field, a type field, a stack bottom marker bit, and a number field;
a value of the type field is a first value, which is to indicate that when a node corresponding to a node label after the first indication label in the first label stack is unreachable, labels the number of which is indicated by the number field after the first indication label are popped up;
the number field is to indicate the number of labels to be popped up;
a value of the stack bottom marker bit is a second value, which is to indicate that the first indication label is not a stack bottom label of the first label stack.

Optionally, the second composite special purpose label comprises a second extension label and a second indication label, and the second indication label comprises a label value field, a type field, a stack bottom marker bit, and a number field;
a value of the type field is a second value, which is to indicate that labels the number of which is indicated by the number field after the second indication label are popped up unconditionally;
the number field is to indicate the number of labels to be popped up;
a value of the stack bottom marker bit is a second value, which is to indicate that the second indication label is not a stack bottom label of the first label stack.

Based on the same concept, an example of the present disclosure further provides an electronic device, as shown in FIG. 9, the electronic device comprises:
a processor 901;
a transceiver 904;
a machine-readable storage medium 902, which stores machine-executable instructions that can be executed by the processor to cause the processor 901 to:
   acquire a first packet, wherein the first packet comprises a first label stack comprising node labels and a composite special purpose label, and the node labels comprise a first label indicating a first node and a second label indicating a second node, the first node is the above-mentioned electronic device;
   if a next label of the first label is a first type of composite special purpose label, and a node corresponding to a next label of the first type of composite special purpose label is unreachable, forward a second packet to the second node through the transceiver 904, wherein the second packet comprises a second label stack, and a stack top label of the second label stack is the second label.

Optionally, the node corresponding to the next label of the first type of composite special purpose label is a third node, and the machine-executable instructions further cause the processor 901 to:
if the next label of the first label is the first type of composite special purpose label, and the third node is reachable, forward a third packet to the third node through the transceiver 904, wherein the third packet comprises a third label stack, and a stack top label of the third label stack is a third label indicating the third node.

Optionally, the node corresponding to the next label of the first type of composite special purpose label is a main tail node which is a tail node in a main path to forward the first packet, and the second node is a backup tail node which is a tail node in a backup path to forward the first packet; or,
the node corresponding to the next label of the first type of composite special purpose label is an intermediate node in the main path, and the second node is an intermediate node or the tail node in the main path.

Optionally, the first node is a main tail node which is a tail node in a main path to forward the first packet, and the second node is a backup tail node which is a tail node in a backup path to forward the first packet;
the machine-executable instructions further cause the processor 901 to:
if the next label of the first label is a second type of composite special purpose label, forward a fourth packet through the transceiver 904, wherein the fourth packet is a packet in an inner layer of the first label stack.

Optionally, when the first node is a source node, the machine-executable instructions further cause the processor 901 to:
receive a fifth packet through the transceiver 904;
encapsulate the first label stack in an outer layer of the fifth packet, to obtain the first packet.

Optionally, the first type of composite special purpose label comprises a first extension label and a first indication label, and the first indication label comprises a label value field, a type field, a stack bottom marker bit, and a number field;
a value of the type field is a first value, which is to indicate that when a node corresponding to a node label after the first indication label in the first label stack is unreachable, labels the number of which is indicated by the number field after the first indication label are popped up;
the number field is to indicate the number of labels to be popped up;
a value of the stack bottom marker bit is a second value, which is to indicate that the first indication label is not a stack bottom label of the first label stack.

Optionally, the second composite special purpose label comprises a second extension label and a second indication label, and the second indication label comprises a label value field, a type field, a stack bottom marker bit, and a number field;
a value of the type field is a second value, which is to indicate that labels the number of which is indicated by the number field after the second indication label are popped up unconditionally;
the number field is to indicate the number of labels to be popped up;
a value of the stack bottom marker bit is a second value, which is to indicate that the second indication label is not a stack bottom label of the first label stack.

In FIG. 9, a communication bus 903 may also be comprised. The processor 901, the machine-readable storage medium 902, and the transceiver 904 communicate with each other through the communication bus 903. The communication bus 903 may be a Peripheral Component Interconnect (PCI) bus or an Extended Industry Standard Architecture (EISA) bus, etc. The communication bus can be divided into an address bus, a data bus, a control bus, and the like.

The transceiver 904 may be a wireless communication module, and the transceiver 904 performs data interaction with other devices under the control of the processor 901.

The machine-readable storage medium 902 may include a Random Access Memory (RAM), and may also include a Non-Volatile Memory (NVM), such as at least one magnetic disk memory. In addition, the machine-readable storage medium may also be at least one storage device located away from the aforementioned processor.

The processor 901 may be a general-purpose processor, comprising a Central Processing unit (CPU), a Network Processor (NP), etc.; it may also be a Digital Signal Processor (DSP), an Application Specific Integrated Circuit (ASIC), a Field-Programmable Gate Array (FPGA) or other programmable logic devices, discrete gate or transistor logic devices, discrete hardware components.

Based on the same invention concept, according to the packet forwarding method provided by the above-mentioned examples of the present disclosure, an example of the present disclosure further provides a machine-readable storage medium, which stores machine-executable instructions that can be processed by a processor to cause the processor to implement the above packet forwarding method.

In yet another example provided by the present disclosure, a computer program product including instructions is also provided, which, when running on a computer, causes the computer to execute the packet forwarding method in the above examples.

It should be noted that, relational terms such as first and second and the like herein are only used to distinguish one entity or operation from another and do not necessarily require or imply any such actual relationship or order between these entities or operations. Moreover, the terms "comprising", "including" or any other variations thereof are intended to encompass a non-exclusive inclusion such that a process, method, article or device that includes a series of elements includes not only those elements, but also includes other elements not explicitly listed or other elements inherent to such a process, method, article or apparatus. Without further limitation, elements defined by the phrase "comprising one..." do not preclude the presence of additional identical elements in a process, method, article or device that includes the mentioned elements.

The above descriptions are only preferred examples of the present disclosure, and are not intended to limit the present disclosure. Any modifications, equivalent replacements, improvements and the like made within the spirit and principles of the present disclosure shall be included within the scope of protection of the present disclosure.

## Claims

1. A packet forwarding method, wherein the method is applied to a first node, and comprises:
acquiring a first packet, wherein the first packet comprises a first label stack comprising node labels and a composite special purpose label, and the node labels comprise a first label indicating the first node and a second label indicating a second node;
in response to determining that a next label of the first label is a first type of composite special purpose label, and a node corresponding to a next label of the first type of composite special purpose label is unreachable, forwarding a second packet to the second node, wherein the second packet comprises a second label stack, and a stack top label of the second label stack is the second label.

2. The method according to claim 1, wherein the node corresponding to the next label of the first type of composite special purpose label is a third node, after acquiring the first packet, the method further comprises:
in response to determining that the next label of the first label is the first type of composite special purpose label, and the third node is reachable, forwarding a third packet to the third node, wherein the third packet comprises a third label stack, and a stack top label of the third label stack is a third label indicating the third node.

3. The method according to claim 1 or 2, wherein,
the node corresponding to the next label of the first type of composite special purpose label is a main tail node which is a tail node in a main path to forward the first packet, and the second node is a backup tail node which is a tail node in a backup path to forward the first packet; or,
the node corresponding to the next label of the first type of composite special purpose label is an intermediate node in the main path, and the second node is an intermediate node or the tail node in the main path.

4. The method according to claim 1, wherein the first node is a main tail node which is a tail node in a main path to forward the first packet, the second node is a backup tail node which is a tail node in a backup path to forward the first packet;
after acquiring the first packet, the method further comprises:
in response to determining that the next label of the first label is a second type of composite special purpose label, forwarding a fourth packet, wherein the fourth packet is a packet in an inner layer of the first label stack.

5. The method according to claim 1, wherein in response to determining that the first node is a source node, acquiring the first packet comprises:
receiving a fifth packet;
encapsulating the first label stack in an outer layer of the fifth packet, to obtain the first packet.

6. The method according to claim 1 or 2, wherein the first type of composite special purpose label comprises a first extension label and a first indication label, and the first indication label comprises a label value field, a type field, a stack bottom marker bit, and a number field;
a value of the type field is a first value, which is to indicate that in response to determining that a node corresponding to a node label after the first indication label in the first label stack is unreachable, labels the number of which is indicated by the number field after the first indication label are popped up;
the number field is to indicate the number of labels to be popped up;
a value of the stack bottom marker bit is a second value, which is to indicate that the first indication label is not a stack bottom label of the first label stack.

7. The method according to claim 4, wherein the second composite special purpose label comprises a second extension label and a second indication label, and the second indication label comprises a label value field, a type field, a stack bottom marker bit, and a number field;
a value of the type field is a second value, which is to indicate that labels the number of which is indicated by the number field after the second indication label are popped up unconditionally;
the number field is to indicate the number of labels to be popped up;
a value of the stack bottom marker bit is a second value, which is to indicate that the second indication label is not a stack bottom label of the first label stack.

8. A packet forwarding apparatus, wherein the apparatus is applied to a first node, and comprises:
an acquisition module, to acquire a first packet, wherein the first packet comprises a first label stack comprising node labels and a composite special purpose label, and the node labels comprise a first label indicating the first node and a second label indicating a second node;
a forwarding module, to forward a second packet to the second node in response to determining that a next label of the first label is a first type of composite special purpose label, and a node corresponding to a next label of the first type of composite special purpose label is unreachable, wherein the second packet comprises a second label stack, and a stack top label of the second label stack is the second label.

9. The apparatus according to claim 8, wherein the node corresponding to the next label of the first type of composite special purpose label is a third node, and the forwarding module is further to:
in response to determining that the next label of the first label is the first type of composite special purpose label, and the third node is reachable, forward a third packet to the third node, wherein the third packet comprises a third label stack, and a stack top label of the third label stack is a third label indicating the third node.

10. The apparatus according to claim 8 or 9, wherein
the node corresponding to the next label of the first type of composite special purpose label is a main tail node which is a tail node in a main path to forward the first packet, and the second node is a backup tail node which is a tail node in a backup path to forward the first packet; or,
the node corresponding to the next label of the first type of composite special purpose label is an intermediate node in the main path, and the second node is an intermediate node or the tail node in the main path.

11. The apparatus according to claim 8, wherein the first node is a main tail node which is a tail node in a main path to forward the first packet, the second node is a backup tail node which is a tail node in a backup path to forward the first packet; the forwarding module is further to:
in response to determining that the next label of the first label is a second type of composite special purpose label, forward a fourth packet, wherein the fourth packet is a packet in an inner layer of the first label stack.

12. The apparatus according to claim 8, wherein in response to determining that the first node is a source node, the acquisition module is specifically to:
receive a fifth packet;
encapsulate the first label stack in an outer layer of the fifth packet, to obtain the first packet.

13. The apparatus according to claim 8 or 9, wherein the first type of composite special purpose label comprises a first extension label and a first indication label, and the first indication label comprises a label value field, a type field, a stack bottom marker bit, and a number field;
a value of the type field is a first value, which is to indicate that in response to determining that a node corresponding to a node label after the first indication label in the first label stack is unreachable, labels the number of which is indicated by the number field after the first indication label are popped up;
the number field is to indicate the number of labels to be popped up;
a value of the stack bottom marker bit is a second value, which is to indicate that the first indication label is not a stack bottom label of the first label stack.

14. The apparatus according to claim 11, wherein the second composite special purpose label comprises a second extension label and a second indication label, and the second indication label comprises a label value field, a type field, a stack bottom marker bit, and a number field;
a value of the type field is a second value, which is to indicate that labels the number of which is indicated by the number field after the second indication label are popped up unconditionally;
the number field is to indicate the number of labels to be popped up;
a value of the stack bottom marker bit is a second value, which is to indicate that the second indication label is not a stack bottom label of the first label stack.

15. An electronic device, wherein the electronic device comprises:
a processor;
a transceiver;
a machine-readable storage medium, which stores machine-executable instructions that can be executed by the processor to cause the processor to:
acquire a first packet, wherein the first packet comprises a first label stack comprising node labels and a composite special purpose label, and the node labels comprise a first label indicating a first node and a second label indicating a second node, the first node is the electronic device;
in response to determining that a next label of the first label is a first type of composite special purpose label, and a node corresponding to a next label of the first type of composite special purpose label is unreachable, forward a second packet to the second node through the transceiver, wherein the second packet comprises a second label stack, and a stack top label of the second label stack is the second label.

16. The electronic device according to claim 15, wherein the node corresponding to the next label of the first type of composite special purpose label is a third node, and the machine-executable instructions further cause the processor to:
in response to determining that the next label of the first label is the first type of composite special purpose label, and the third node is reachable, forward a third packet to the third node through the transceiver, wherein the third packet comprises a third label stack, and a stack top label of the third label stack is a third label indicating the third node.

17. The electronic device according to claim 15 or 16, wherein,
the node corresponding to the next label of the first type of composite special purpose label is a main tail node which is a tail node in a main path to forward the first packet, and the second node is a backup tail node which is a tail node in a backup path to forward the first packet; or,
the node corresponding to the next label of the first type of composite special purpose label is an intermediate node in the main path, and the second node is an intermediate node or the tail node in the main path.

18. The electronic device according to claim 15, wherein the first node is a main tail node which is a tail node in a main path to forward the first packet, the second node is a backup tail node which is a tail node in a backup path to forward the first packet;
the machine-executable instructions further cause the processor to:
in response to determining that the next label of the first label is a second type of composite special purpose label, forward a fourth packet through the transceiver, wherein the fourth packet is a packet in an inner layer of the first label stack.

19. The electronic device according to claim 15, wherein in response to determining that the first node is a source node, the machine-executable instructions further cause the processor to:
receive a fifth packet through the transceiver;
encapsulate the first label stack in an outer layer of the fifth packet, to obtain the first packet.

20. The electronic device according to claim 15 or 16, wherein the first type of composite special purpose label comprises a first extension label and a first indication label, and the first indication label comprises a label value field, a type field, a stack bottom marker bit, and a number field;
a value of the type field is a first value, which is to indicate that in response to determining that a node corresponding to a node label after the first indication label in the first label stack is unreachable, labels the number of which is indicated by the number field after the first indication label are popped up;
the number field is to indicate the number of labels to be popped up;
a value of the stack bottom marker bit is a second value, which is to indicate that the first indication label is not a stack bottom label of the first label stack.

21. The electronic device according to claim 20, wherein the second composite special purpose label comprises a second extension label and a second indication label, and the second indication label comprises a label value field, a type field, a stack bottom marker bit, and a number field;
a value of the type field is a second value, which is to indicate that labels the number of which is indicated by the number field after the second indication label are popped up unconditionally;
the number field is to indicate the number of labels to be popped up;
a value of the stack bottom marker bit is a second value, which is to indicate that the second indication label is not a stack bottom label of the first label stack.

22. A machine-readable storage medium, which stores machine-executable instructions that, when called and executed by a processor, cause the processor to implement the method according to any one of claims 1 to 7.

23. A computer program product, which causes a processor to implement the method according to any one of claims 1 to 7.
